# EUROPEAN PATENT APPLICATION

(11) **EP 1 545 033 A1**
(43) Date of publication of application: **22.06.2005**
(21) Application number: 03770002.8
(22) Date of filing: 30.10.2003
(51) Int. Cl.: H04J 11/00

(54) **MULTI-CARRIER COMMUNICATION METHOD AND MULTI-CARRIER COMMUNICATION METHOD**

(30) Priority: 01.11.2002 JP 2002320158
(71) Applicant: Matsushita Electric Industrial Co., Ltd., Kadoma-shi, Osaka 571-8501 (JP)
(72) Inventor: EBIKO, Keisuke, Yokosuka-shi, Kanagawa 239-0807 (JP)
(74) Representative: Grünecker, Kinkeldey, Stockmair & Schwanhäusser Anwaltssozietät
(86) International application number: PCT/JP2003/013897
(87) International publication number: WO 2004/040815

(57) **Abstract**

A multi-carrier communication apparatus and a multi-carrier communication method, wherein in a radio communication that performs multi-antenna transmission, a transmission peak power is suppressed without inducing nonlinear distortion and without decreasing transmission efficiency. Based on control information outputted from an exchange pattern decision section (190), a data exchange section (120) exchanges data, which are arranged on subcarriers of each group, between data streams in units of groups of subcarriers. Power measurement sections (160-1 to n) each measure powers of OFDM symbols in each data stream and compare them with a predetermined threshold and as a result of comparison, when the power of the OFDM symbol is greater than the predetermined threshold, the measurement sections each output power measurement results to an exchange pattern decision section (190). The exchange pattern decision section (190) decides an exchange pattern for exchanging data in the data stream of which the measured power is greater than the predetermined threshold, and outputs it as control information to the data exchange section (120).

## Description

### Technical Field

The present invention relates to a multi-carrier communication apparatus and a multi-carrier communication method and in particular, it relates to a multi-carrier communication apparatus and multi-carrier communication method for performing multi-antenna transmission.

### Background Art

Recently, in mobile communications, a multi-carrier modulation scheme and multi-antenna transmission have captured attention in order to realize high-speed transmission through the effective use of limited frequency resources. Further, studies have been made to attain improvement in frequency utilization efficiency by combining these two technologies (for example, refer to FIG. 4 in Japanese Unexamined patent publication No. 2002-44051).

For the multi-antenna transmission that transmits data using a plurality of antennas, MIMO (Multi-Input Multi-Output) and STC (Space-Time Coding) are known. In MIMO or STC, the same frequency and the same spread code are used for different data streams, and signals are transmitted from a plurality of transmitting antennas at the same time. These signals are then superposed in a propagation path and are received by a receiving set.

On the other hand, the multi-carrier modulation scheme is a technology such that using a plurality of subcarriers in which the transmission rate is suppressed to a level causing no frequency selective fading, data are transmitted to thereby improve transmission efficiency and as a result, high-speed transmission is enabled. In particular, an OFDM (Orthogonal Frequency Division Multiplex) modulation scheme is a scheme that is highest in frequency utilization efficiency among the multi-carrier modulation schemes because a plurality of subcarriers where data are arranged are mutually orthogonalized. In addition, the OFDM modulation scheme can be realized using a relatively simple hardware configuration. Therefore, various studies have been made on the OFDM modulation scheme.

As described above, in the multi-carrier modulation scheme such as an OFDM modulation scheme, parallel transmission is carried out using a plurality of subcarriers. At this time, when phases of respective subcarriers are aligned, a remarkably large transmission peak power is generated as compared with an average transmission power. In such a case, although a transmission power amplifier capable of maintaining the linearity of output over a wide dynamic range must be used, in general, such an amplifier is low in efficiency, which results in increase in the power consumption of the apparatus.

Accordingly, for example, a method in which a transmission power greater than a threshold is suppressed by a limiter to thereby suppress the transmission peak power is employed in some cases (for example, refer to FIG. 1 in Japanese Unexamined patent publication No. 2002-44054). In addition, a transmission peak-power suppressing method of using Partial Transmit Sequences called as PTS is also known. In PTS, a plurality of groups of subcarriers are formed, the subcarriers are subjected to inverse Fourier transform for each group, and multiplied by different phase coefficients. Then, the outputs of all the groups are added up to obtain a signal, and such a sequence of phase coefficient that the peak power of the obtained signal is minimized is selected. Further, side information for communicating the selected sequence of the phase coefficient to the receiving end is transmitted and at the receiving end, reverse shift of the phase is performed based on the side information, whereby data are demodulated (for example, refer to Electronics Letters, Volume: 33, Issue: 5, 1997, "OFDM with reduced peak-to-average power ratio by optimum combination of partial transmit sequences", Muller, S.H.; Huber, J.B.).

However, for suppressing the transmission peak power in the multi-carrier modulation, for example, when performing nonlinear processing using a limiter, in general, there arise problems that due to nonlinear distortion, interference among the subcarriers is increased to result in deterioration of properties and unnecessary out-of-band radiation is increased to result in interference with out-of-band signals. Further, when using the PTS, there arises a problem that the amount of side information different from information to be normally transmitted is increased and as a result, the transmission efficiency is lowered. These problems similarly arise also when using a combination of the multi-antenna transmission and the multi-carrier modulation scheme.

### Disclosure of the Invention

An object of the present invention is to provide a multi-carrier communication apparatus and a multi-carrier communication method, wherein in a radio communication that performs multi-antenna transmission, a transmission peak power is suppressed without inducing nonlinear distortion and without decreasing transmission efficiency.

The present inventors have come up with the present invention by taking into consideration the fact that in a multi-carrier communication apparatus that performs multi-antenna transmission, the content of data stream is different for each transmitting antenna and a part of the data streams is exchanged among the transmitting antennas, whereby transmission peak powers of each antenna are varied.

That is, the essence of the present invention is to perform transmission while exchanging a part of data streams among transmitting antennas such that a transmission peak power reaches equal to or lesser than a previously set threshold.

According to one aspect of the present invention, a multi-carrier communication apparatus is an apparatus for simultaneously transmitting a plurality of different data streams from a plurality of antennas using the same carrier group, and the apparatus adopts a structure including a determination section that determines whether a peak power is occurred in at least one data stream, and an exchange section that exchanges a part of data in said data stream for a part of data in another data stream when it is determined that the peak power is occurred.

According to another aspect of the present invention, a multi-carrier communication method is a method for simultaneously transmitting a plurality of different data streams from a plurality of antennas using the same carrier group, and the method includes a step of determining whether a peak power is occurred in at least one data stream, and a step of exchanging a part of data in said data stream for a part of data in another data stream when it is determined that the peak power is occurred.

### Brief Description of the Drawings

FIG. 1 is a block diagram showing a configuration of a transmitting multi-carrier communication apparatus according to a first embodiment of the present invention;
FIG. 2 is a block diagram showing a configuration of a receiving multi-carrier communication apparatus according to the first embodiment;
FIG. 3 is a flow chart showing operations of a transmitting multi-carrier communication apparatus according to the first embodiment;
FIG. 4 is a diagram showing one example of data streams to be transmitted from a plurality of transmitting antennas;
FIG. 5 is a diagram showing one example of a data exchange in a transmitting multi-carrier communication apparatus according to the first embodiment;
FIG. 6 is a block diagram showing a configuration of a receiving multi-carrier communication apparatus according to a second embodiment of the present invention;
FIG. 7 is a diagram showing one example of a data exchange in a transmitting multi-carrier communication apparatus according to the second embodiment;
FIG. 8 is a block diagram showing a configuration of a transmitting multi-carrier communication apparatus according to a third embodiment of the present invention;
FIG. 9 is a diagram explaining operations of a transmitting multi-carrier communication apparatus according to the third embodiment;
FIG. 10 is a block diagram showing a configuration of a transmitting multi-carrier communication apparatus according to a fourth embodiment of the present invention; and
FIG. 11 is a block diagram showing a configuration of a receiving multi-carrier communication apparatus according to the fourth embodiment of the present invention.

### Best Mode for Carrying Out the Invention

With reference now to the attached drawings, embodiments of the present invention will be explained in detail below. In the following description, an OFDM modulation scheme is cited as one example of a multi-carrier modulation scheme. Specifically, a case is described where multi-carrier signals to be transmitted are OFDM symbols.

### (First Embodiment)

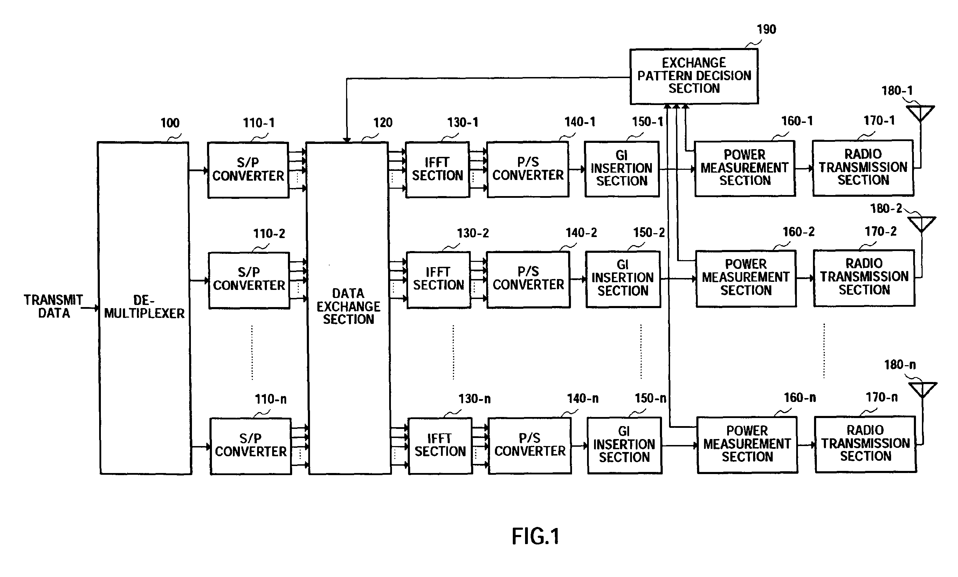

FIG. 1 is a block diagram showing a configuration of a transmitting multi-carrier communication apparatus according to a first embodiment of the present invention. The multi-carrier communication apparatus shown in FIG. 1 has a demultiplexer 100, S/P (Serial/Parallel) converters 110-1 to n (n is a natural number of 2 or more), a data exchange section 120, IFFT (Inverse Fast Fourier Transform) sections 130-1 to n, P/S (Parallel/Serial) converters 140-1 to n, GI (Guard Interval) insertion sections 150-1 to n, power measurement sections 160-1 to n, radio transmission sections 170-1 to n, transmitting antennas 180-1 to n and an exchange pattern decision section 190. This multi-carrier communication apparatus carries out MIMO transmission. In other words, different data are simultaneously transmitted from respective transmitting antennas 180-1 to n using the same frequency and the same spread code.

The demultiplexer 100 divides transmit data into a plurality of (n) data streams.

The S/P converters 110-1 to n S/P-convert respective data streams to produce parallel data for each subcarrier.

Based on control information outputted from the exchange pattern decision section 190, the data exchange section 120 exchanges a part of parallel data corresponding to each data stream for a part of parallel data corresponding to another data stream. At this time, the data exchange section 120 exchanges parallel data of each data stream for that of another data stream in units of groups formed by collecting a predetermined number of parallel data. Since the parallel data each correspond to the subcarriers, the group as a unit for data exchange is hereinafter referred to as "a group of subcarriers" or simply referred to as "a group".

The IFFT sections 130-1 to n perform IFFT processing on the parallel data outputted from the data exchange section 120 and arrange the data on the subcarriers. Specifically, after the parallel data are exchanged in units of groups of subcarriers, the IFFT sections 130-1 to n perform IFFT processing on the parallel data.

The P/S converters 140-1 to n P/S-convert the data in each subcarrier outputted from the IFFT sections 130-1 to n to produce OFDM symbols.

The GI insertion sections 150-1 to n insert guard intervals into OFDM symbols in each data stream.

The power measurement sections 160-1 to n measure powers of OFDM symbols in each data stream and compare them with a predetermined threshold. Further, as a result of the comparison, when the power of the OFDM symbol is equal to or lesser than the predetermined threshold, the power measurement sections 160-1 to n output the OFDM symbol to the radio transmission sections 170-1 to n, and when the power of the OFDM symbol is greater than the predetermined threshold, the power measurement sections 160-1 to n output the power measurement results of each OFDM symbol to the exchange pattern decision section 190.

The radio transmission sections 170-1 to n apply radio transmission processing such as D/A conversion and up-conversion to the OFDM symbols, and transmit the symbols from the transmitting antennas 180-1 to n.

The exchange pattern decision section 190 decides an exchange pattern for exchanging, in units of groups of subcarriers, data in data streams of which the power measured by the power measurement sections 160-1 to n is greater than the predetermined threshold, and outputs the pattern to the data exchange section 120 as control information. Specific examples of the exchange pattern are described later.

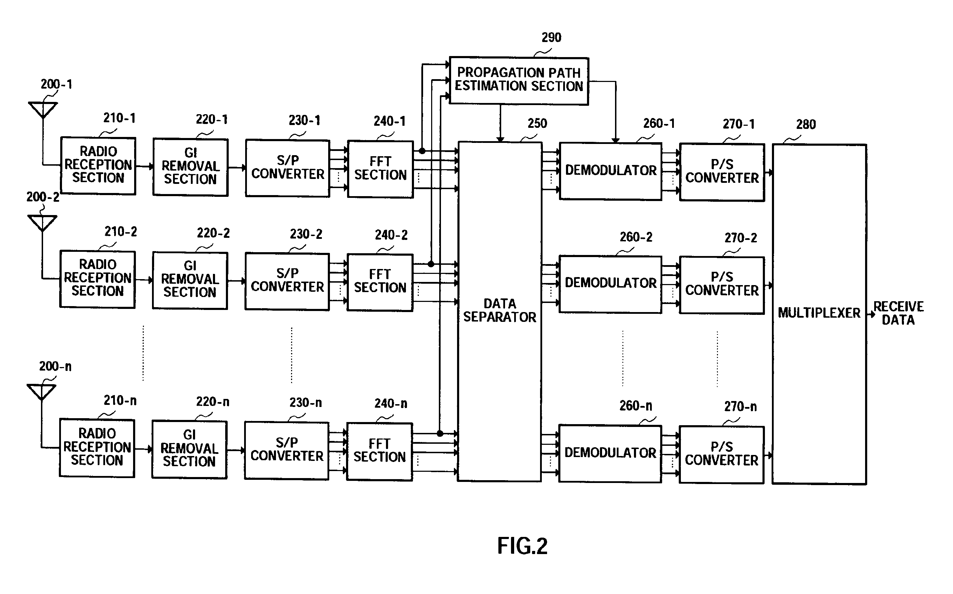

FIG. 2 is a block diagram showing a configuration of a receiving multi-carrier communication apparatus according to the first embodiment. The multi-carrier communication apparatus shown in FIG. 2 has receiving antennas 200-1 to n, radio reception sections 210-1 to n, GI removal sections 220-1 to n, S/P converters 230-1 to n, FFT (Fast Fourier Transform) sections 240-1 to n, a data separator 250, demodulators 260-1 to n, P/S converters 270-1 to n, a multiplexer 280 and a propagation path estimation section 290.

The radio reception sections 210-1 to n receive OFDM symbols from the receiving antennas 200-1 to n, and apply radio reception processing such as down-conversion and A/D conversion to the symbols.

The GI removal sections 220-1 to n remove guard intervals from the OFDM symbols received from respective receiving antennas 200-1 to n.

The S/P converters 230-1 to n S/P-convert the OFDM symbols in each data stream to produce parallel data for each subcarrier.

The FFT sections 240-1 to n perform FFT-processing on the parallel data in each data stream to produce data for each subcarrier.

Based on the propagation path estimation results outputted from the propagation path estimation section 290, the data separator 250 separates the data for each subcarrier into the data streams corresponding to the transmitting antennas 180-1 to n in the transmitting multi-carrier communication apparatus.

Based on the propagation path estimation results outputted from the propagation path estimation section 290, the demodulators 260-1 to n demodulate respective data streams.

The P/S converters 270-1 to n P/S-convert the demodulation results outputted from the demodulators 260-1 to n to produce serial data.

The multiplexer 280 multiplexes the serial data in each data stream to obtain receive data.

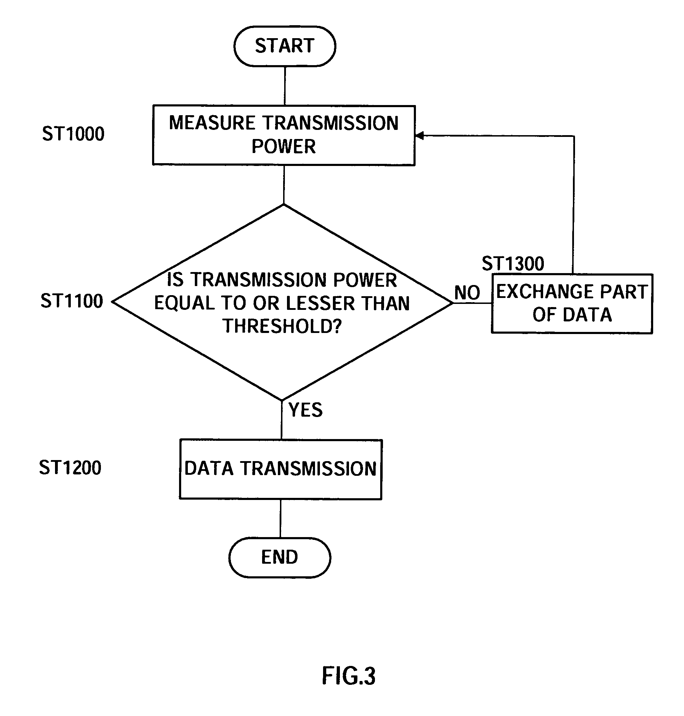

Subsequently, operations of the multi-carrier communication apparatus configured as described above are described by referring to a flow chart shown in FIG. 3. The operations of the receiving multi-carrier communication apparatus (FIG. 2) in the present embodiment are the same as those of a conventional multi-carrier communication apparatus and therefore, its description is omitted.

First, transmit data are divided by the demultiplexer 100 to produce n data streams. Respective data streams are each S/P-converted by the S/P converters 110-1 to n to produce parallel data for each data stream. The parallel data are inputted to the IFFT sections 130-1 to n through the data exchange section 120, are IFFT-processed by the IFFT sections 130-1 to n and then, the resulting parallel data in each data stream are arranged on subcarriers of which the frequencies are orthogonalized with each other. More specifically, at the start of operations, the IFFT-processing is carried out without performing an exchange of data between the data streams.

Then, respective data streams after IFFT-processing are each inputted to the P/S converters 140-1 to n and P/S-converted to produce OFDM symbols.

Guard intervals are inserted into the OFDM symbols in each data stream by the GI insertion sections 150-1 to n, and the powers of the symbols are measured by the power measurement sections 160-1 to n (ST1000). The measured powers are compared with the predetermined threshold (ST1100), and as a result of the comparison, when the measured powers of all the data streams are equal to or lesser than the predetermined threshold, the OFDM symbols are subjected to radio transmission processing such as D/A conversion and up-conversion by the radio transmission sections 170-1 to n and are transmitted through the transmitting antennas 180-1 to n (ST1200).

On the other hand, as a result of comparison of powers, when a data stream of which the measured power exceeds the predetermined threshold is present, the measured powers of each data stream are communicated to the exchange pattern decision section 190. Then, by the exchange pattern decision section 190, an exchange pattern is decided in units of groups of subcarriers and outputted to the data exchange section 120 as control information, in order to exchange a part of the parallel data in a data stream of which the measured power is greater than the predetermined threshold for a part of the parallel data in another data stream. Then, an exchange of the parallel data based on the control information is performed by the data exchange section 120 (ST1300). In the multi-carrier communication apparatus according to the present embodiment, the content of the data in each data stream varies so as to carry out MIMO transmission, and when a part of the parallel data is exchanged as described above, a phase of the subcarrier where the parallel data in each data stream are arranged is changed, namely, the power is changed, so that a transmission peak power can be suppressed.

After an exchange of parallel data, the data are again IFFT-processed by the IFFT sections 130-1 to n, and P/S-converted by the P/S converters 140-1 to n to produce OFDM symbols. Further, guard intervals are inserted into the OFDM symbols by the GI insertion sections 150-1 to n, the powers of the OFDM symbols are measured by the power measurement sections 160-1 to n and then, the measured powers are compared with the predetermined threshold. Thereafter, in the same manner as in the above-described operations, an exchange of parallel data is performed till powers of all the OFDM symbols reach equal to or lesser than the predetermined threshold, and when powers of all the OFDM symbols reach equal to or lesser than the predetermined threshold (that is, a transmission peak power is suppressed), respective OFDM symbols are each transmitted through the transmitting antennas 180-1 to n by the radio transmission sections 170-1 to n.

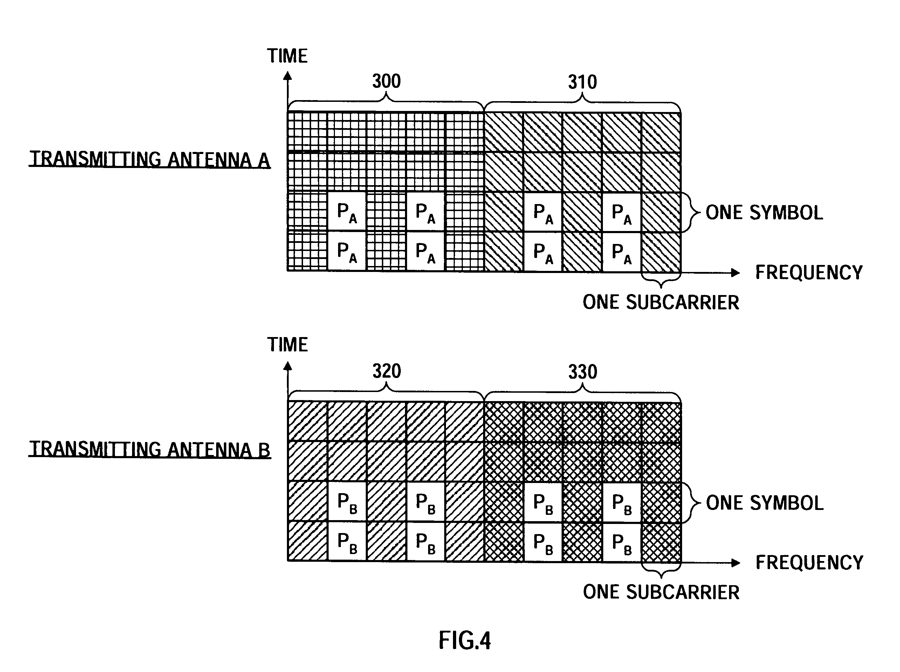

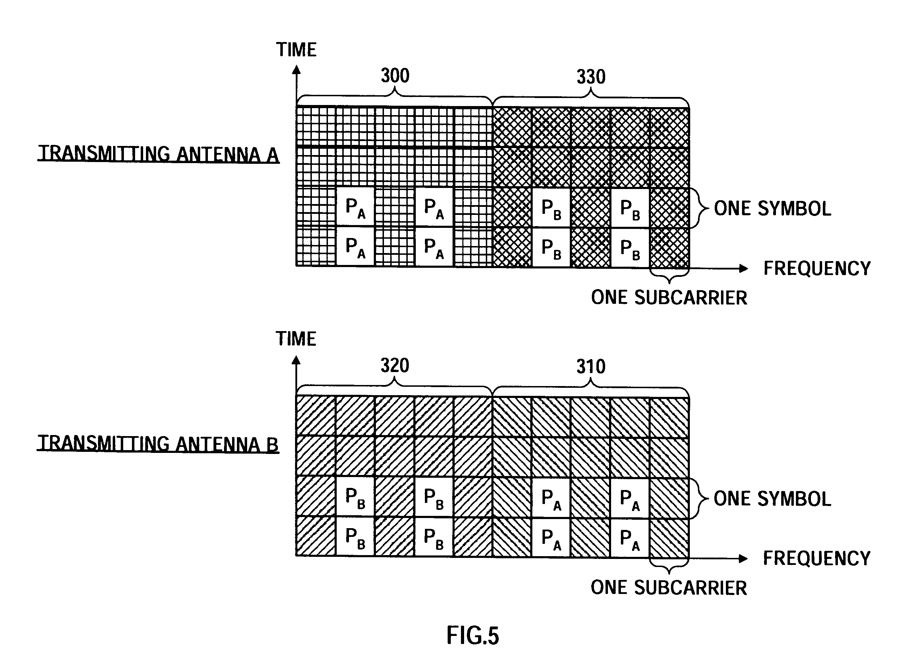

Subsequently, specific examples of the exchange pattern are described by referring to FIGS. 4 and 5. For ease of description, a case is herein used where the multi-carrier communication apparatus has two transmitting antennas A and B; however, even when the apparatus has three or more transmitting antennas, the parallel data may be exchanged by an exchange pattern based on the same concept.

FIG. 4 is a diagram schematically showing data streams transmitted from each of the transmitting antennas A and B. In the same figure, the horizontal axis indicates frequency and the vertical axis indicates time.

From the transmitting antenna A, four symbols each are transmitted by five subcarriers belonging to a group 300 and by five subcarriers belonging to a group 310. Similarly, from the transmitting antenna B, four symbols each are transmitted by five subcarriers belonging to a group 320 and by five subcarriers belonging to a group 330. The frequency of subcarriers belonging to the group 300 is equal to that of subcarriers belonging to the group 320, and the frequency of subcarriers belonging to the group 310 is equal to that of subcarriers belonging to the group 330. P_{A} and P_{B} each indicate an orthogonal pilot symbol periodically inserted.

In the present embodiment, a pattern for exchanging data between the groups of subcarriers having the same frequency is used as an exchange pattern. Accordingly, when a data stream of which the measured power in the power measurement sections 160-1 to n is greater than the predetermined threshold is present, for example, a pattern for exchanging symbols of the group 310 for those of the group 330 as shown in FIG. 5 is decided by the exchange pattern decision section 190, this exchange pattern as the control information is communicated to the data exchange section 120 and then, the exchange of the data is actually performed.

At this time, since the orthogonal pilot symbols also are exchanged as shown in FIG. 5, normal propagation path estimation is performed by the propagation path estimation section 290 of the receiving multi-carrier communication apparatus and based on the results, separation of the data is performed by the data separator 250, so that the receiving multi-carrier communication apparatus can correctly separate the data and demodulate them even when side information on the exchange pattern of the data is not obtained.

As described above, according to the present embodiment, a part of data in a data stream of which the measured power is greater than a predetermined threshold is exchanged for a part of data including pilot symbols in another data stream arranged on a sub-carrier having the same frequency as that of the data and therefore, it is possible to prevent increase in interference among sub-carriers without performing nonlinear processing, and to suppress a transmission peak power without lowering transmission efficiency while making side information unnecessary.

### (Second Embodiment)

A second embodiment of the present invention is characterized by introducing side information to increase the number of exchange patterns and thereby, aiming at increasing an effect of suppressing the transmission peak power.

A configuration of the transmitting multi-carrier communication apparatus according to the second embodiment is the same as that of the transmitting multi-carrier communication apparatus (FIG. 1) according to the first embodiment and therefore, its description is omitted.

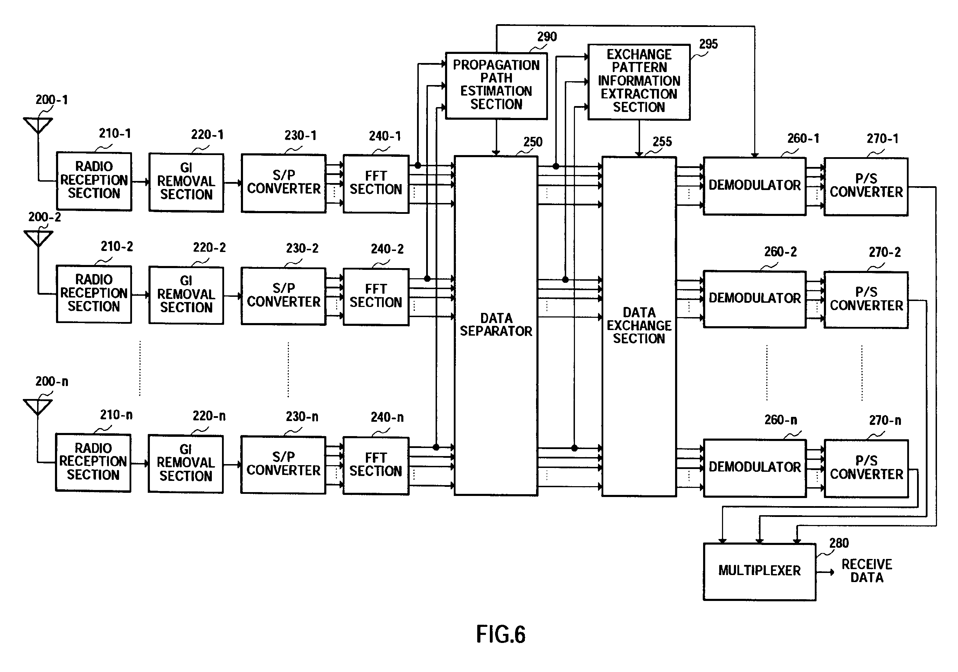

FIG. 6 is a block diagram showing a configuration of the receiving multi-carrier communication apparatus according to the second embodiment. In the multi-carrier communication apparatus shown in the same figure, the same sections as those in the multi-carrier communication apparatus shown in FIG. 2 are assigned the same symbols to omit the descriptions. The multi-carrier communication apparatus shown in FIG. 6 has receiving antennas 200-1 to n, radio receiving sections 210-1 to n, GI removal sections 220-1 to n, S/P converters 230-1 to n, FFT sections 240-1 to n, a data separator 250, a data exchange section 255, demodulators 260-1 to n, P/S converters 270-1 to n, a multiplexer 280, a propagation path estimation section 290 and an exchange pattern information extraction section 295.

Based on exchange pattern information transmitted as the side information from the transmitting multi-carrier communication apparatus, the data exchange section 255 exchanges the data, which are arranged on subcarriers of each group, between the data streams.

From the data streams, the exchange pattern information extraction section 295 extracts the exchange pattern transmitted as the side information from the transmitting multi-carrier communication apparatus.

Subsequently, the operations of the multi-carrier communication apparatus configured as described above are described.

First, in the same manner as in the first embodiment, transmit data are divided by the demultiplexer 100 to produce n data streams. Respective data streams are S/P-converted by the S/P converters 110-1 to n to produce parallel data for each data stream. The parallel data are inputted to the IFFT sections 130-1 to n through the data exchange section 120, are IFFT-processed by the IFFT sections 130-1 to n and then, the resulting parallel data in each data stream are arranged on subcarriers of which the frequencies are orthogonalized with each other. At this time, in the present embodiment, an exclusive subcarrier is provided to arrange exchange pattern information for the communication of an exchange pattern to the receiving multi-carrier communication apparatus.

Then, respective data streams after IFFT-processing are each inputted to the P/S converters 140-1 to n and P/S-converted to produce OFDM symbols.

Into the OFDM symbols of each data stream, guard intervals are inserted by the GI insertion sections 150-1 to n, and the powers of the symbols are measured by the power measurement sections 160-1 to n. The measured powers are compared with the predetermined threshold, and as a result of the comparison, when the measured powers of all the data streams are equal to or lesser than the predetermined threshold, the OFDM symbols are subjected to radio transmission processing such as D/A conversion and up-conversion by the radio transmission sections 170-1 to n and are transmitted through the transmitting antennas 180-1 to n.

On the other hand, as a result of the comparison of powers, when a data stream of which the measured power is greater than the predetermined threshold is present, the measured powers of each data stream are communicated to the exchange pattern decision section 190. Then, by the exchange pattern decision section 190, an exchange pattern is decided in units of groups of subcarriers and outputted to the data exchange section 120 as control information, in order to exchange a part of the parallel data in a data stream of which the measured power is greater than the predetermined threshold for a part of the parallel data in another data stream. Then, an exchange of the parallel data based on the control information is performed by the data exchange section 120.

At this time, exchange pattern information for the communication of an exchange pattern decided by the exchange pattern decision section 190 to the receiving multi-carrier communication apparatus is arranged on an exclusive subcarrier. The exchange pattern information may be MIMO transmitted from a plurality of transmitting antennas or may be further transmitted only from one transmitting antenna which is expected to correspond to the best propagation path characteristics.

Thereafter, in the same manner as in the first embodiment, an exchange of data is performed till powers of all the OFDM symbols reach equal to or lesser than the predetermined threshold, and when powers of all the OFDM symbols reach equal to or lesser than the predetermined threshold (that is, a transmission peak power is suppressed), respective OFDM symbols are transmitted through the transmitting antennas 180-1 to n by the radio transmission sections 170-1 to n.

Respective OFDM symbols transmitted are multiplexed on a propagation path, received by respective receiving antennas 200-1 to n and subjected to radio reception processing such as down-conversion and A/D conversion by the radio receiving sections 210-1 to n. From the OFDM symbols subjected to radio reception processing, guard intervals are removed by the GI removal sections 220-1 to n, the symbols are then S/P-converted by the S/P converters 230-1 to n and FFT-processed by the FFT sections 240-1 to n. Thereafter, using the FFT processing results, propagation path estimation is performed by the propagation path estimation section 290, and the data in each subcarrier are separated by data separator 250 so as to correspond to the data stream after the group exchange at the transmitting end.

From each data stream obtained through the separation, exchange pattern information is extracted by the exchange pattern information extraction section 295. As described above, the exchange pattern information may be included in a plurality of data streams or may be further included only in one data stream.

Then, based on the extracted exchange pattern information, an exchange of data is performed by the data exchange section 255 so that the data may correspond to the respective data streams before the group exchange in the transmitting multi-carrier communication apparatus. By doing so, the order of the data is made equal to that of data before the group exchange in the transmitting multi-carrier communication apparatus. Respective data streams after the data exchange are demodulated by the demodulators 260-1 to n, P/S-converted by the P/S converters 270-1 to n and multiplexed by the multiplexer 280, whereby receive data are obtained.

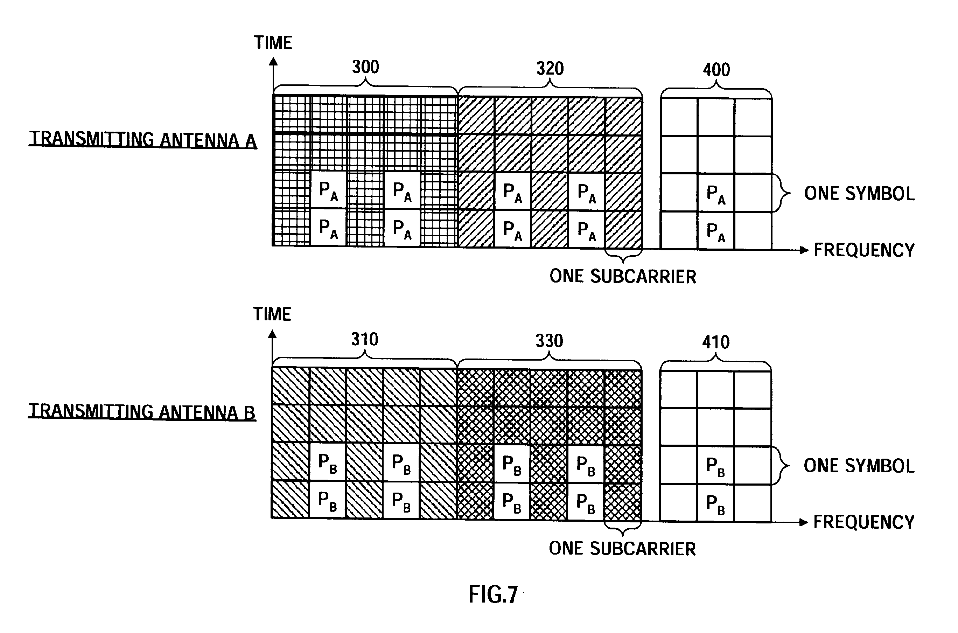

Subsequently, specific examples of the exchange pattern are described by referring to FIGS. 4 and 7. For ease of description, a case is herein used where the multi-carrier communication apparatus has two transmitting antennas A and B; however, even when the apparatus has three or more transmitting antennas, the parallel data may be exchanged by an exchange pattern based on the same concept.

In the present embodiment, a part of the data in the data stream shown in FIG. 4 can be exchanged to produce the data stream as shown in FIG. 7. More specifically, an exchange pattern for exchanging data between the groups of subcarriers having different frequencies can be used. Accordingly, when a data stream of which the measured power in the power measurement sections 160-1 to n is greater than the predetermined threshold is present, for example, a pattern for exchanging symbols of the group 310 for those of the group 320 as shown in FIG. 7 is decided by the exchange pattern decision section 190, this exchange pattern as the control information is communicated to the data exchange section 120 and then, the exchange of the data is actually performed.

At this time, as shown in FIG. 7, orthogonal pilot symbols are not exchanged and fixedly assigned for each transmitting antenna, so that the exchange of the data is enabled between the groups of subcarriers having different frequencies. In addition, exchange pattern information belonging to the group 400 and the group 410 is arranged on exclusive subcarriers and transmitted.

Since the exchange pattern information of the present embodiment is label information corresponding to the exchange pattern, the amount of the side information is reduced and the decreasing rate of transmission efficiency is small, as compared with PTS where the sequence of the phase coefficient described in the conventional art is transmitted as the side information.

In addition, the orthogonal pilot symbols are excluded from an object to be exchanged and therefore, a propagation path estimated value between groups can be subjected to interpolation processing in the propagation path estimation section 290 at the receiving end.

As described above, according to the present embodiment, a part of data in a data stream of which the measured power is greater than a predetermined threshold is exchanged for a part of data other than the pilot symbols in another data stream and therefore, it is possible to prevent increase in interference among sub-carriers without performing nonlinear processing, and to perform an exchange of data is more freely, so that a transmission peak power can be further suppressed.

### (Third Embodiment)

A third embodiment of the present invention is characterized by performing directional transmission using different transmission weights for each data stream to remove a spatial correlation between a transmitting antenna and a receiving antenna.

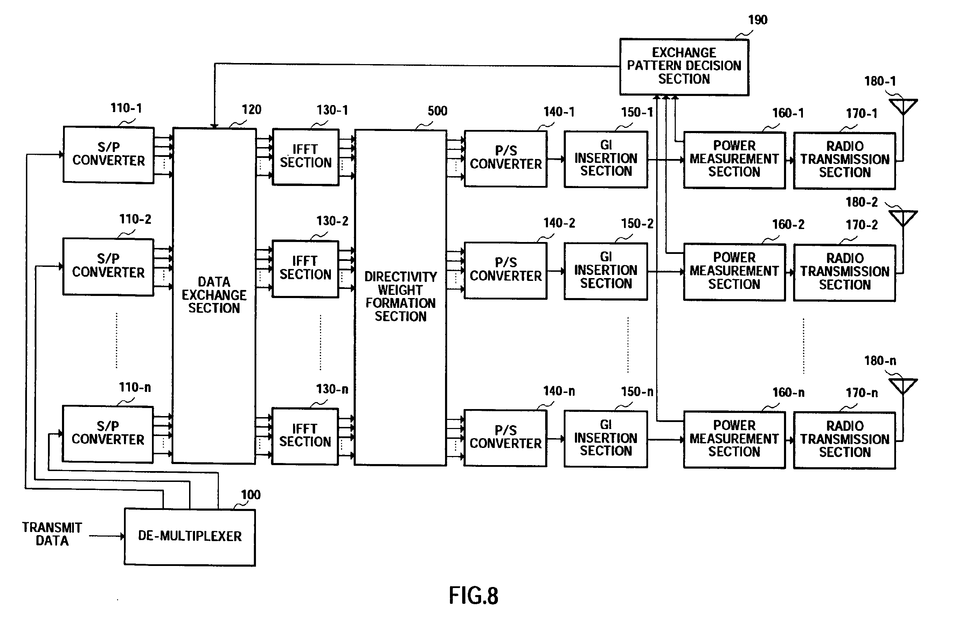

FIG. 8 is a block diagram showing a configuration of the transmitting multi-carrier communication apparatus according to the third embodiment. In the multi-carrier communication apparatus shown in the same figure, the same sections as those in the multi-carrier communication apparatus shown in FIG. 1 are assigned the same symbols to omit the descriptions. The multi-carrier communication apparatus shown in FIG. 8 has a demultiplexer 100, S/P converters 110-1 to n, a data exchange section 120, IFFT sections 130-1 to n, P/S converters 140-1 to n, GI insertion sections 150-1 to n, power measurement sections 160-1 to n, radio transmission sections 170-1 to n, transmitting antennas 180-1 to n, an exchange pattern decision section 190 and a directivity weight formation section 500.

The directivity weight formation section 500 performs weighting on respective data streams using different directivity weights.

A configuration of the receiving multi-carrier communication apparatus according to the third embodiment is the same as that of the receiving multi-carrier communication apparatus (FIG. 2) according to the first embodiment and therefore, its description is omitted.

Subsequently, operations of the multi-carrier communication apparatus configured as described above are described. The operations of the receiving multi-carrier communication apparatus (FIG. 2) in the present embodiment are the same as that of a conventional multi-carrier communication apparatus and therefore, its description is omitted.

First, in the same manner as in the first embodiment, transmit data are divided by the demultiplexer 100 to produce n data streams. Respective data streams are each S/P-converted by the S/P converters 110-1 to n to produce parallel data for each data stream. The parallel data are inputted to the IFFT sections 130-1 to n through the data exchange section 120, are IFFT-processed by the IFFT sections 130-1 to n and then, the resulting parallel data in each data stream are arranged on subcarriers of which the frequencies are orthogonalized with each other.

Then, respective data streams IFFT-processed are inputted to the directivity weight formation section 500 and weighed using different directivity weights for each data stream. Respective data streams weighed are inputted to the P/S converters 140-1 to n and P/S-converted to produce OFDM symbols.

Guard intervals are inserted into the OFDM symbols in each data stream by the GI insertion sections 150-1 to n, and the powers of the symbols are measured by the power measurement sections 160-1 to n. The measured powers are compared with the predetermined threshold, and as a result of the comparison, when the measured powers of all the data streams are equal to or lesser than the predetermined threshold, the OFDM symbols are subjected to radio transmission processing such as D/A conversion and up-conversion by the radio transmission sections 170-1 to n and are directionally transmitted through the transmitting antennas 180-1 to n.

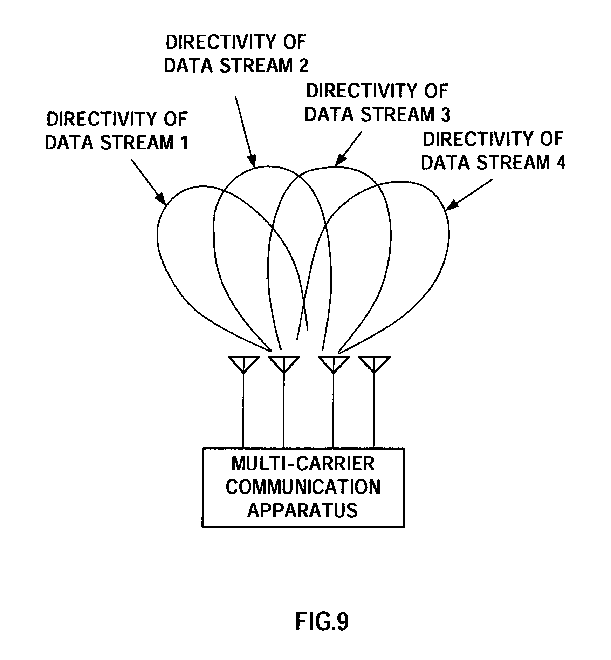

At this time, since each data stream is weighed by the directivity weight, for example, when the apparatus has four transmitting antennas (in the case of n=4), four data streams 1 to 4 are each transmitted in different directivities as shown in FIG. 9. In other words, the transmitting antenna and the data stream do not have one-to-one correspondence relation but the correspondence relation between the directivity and the data stream varies due to an exchange of the data by the data exchange section 120. As a result, since the spatial correlation between the transmitting antenna and the receiving antenna in each data stream is removed, the separation accuracy of data in the receiving multi-carrier communication apparatus can be improved.

On the other hand, as a result of the comparison of powers, when a data stream of which the measured power is greater than the predetermined threshold is present, the measured powers of each data stream are communicated to the exchange pattern decision section 190. Then, by the exchange pattern decision section 190, an exchange pattern is decided in units of groups of subcarriers and outputted to the data exchange section 120 as control information, in order to exchange a part of the parallel data in a data stream of which the measured power is greater than the predetermined threshold for a part of the parallel data in another data stream. Then, an exchange of the parallel data based on the control information is performed by the data exchange section 120.

Thereafter, in the same manner as in the first embodiment, an exchange of data is performed till powers of all the OFDM symbols reach equal to or lesser than the predetermined threshold, and when powers of all the OFDM symbols reach equal to or lesser than the predetermined threshold (that is, a transmission peak power is suppressed), respective OFDM symbols are directionally transmitted through the transmitting antennas 180-1 to n by the radio transmission sections 170-1 to n.

As described above, according to the present embodiment, a part of data in a data stream of which the measured power is greater than a predetermined threshold is exchanged for a part of data in another data stream arranged on a sub-carrier having the same frequency as that of the data and therefore, it is possible to prevent increase in interference among sub-carriers without performing nonlinear processing, and to suppress a transmission peak power without lowering transmission efficiency while making side information unnecessary. Further, respective data streams are weighed using different directivity weights, so that a correlation between the propagation environments can be removed and as a result, the separation accuracy of data at the receiving end can be improved.

In the present embodiment, not only a correspondence relation between the data stream and the directivity weight is changed but also the directivity weight itself for use in each data stream may be further changed.

### (Fourth Embodiment)

A fourth embodiment of the present invention is characterized in that a plurality of data streams being produced by STC (Space-Time Coding) or by SFC (Space-Frequency Coding) and having a coding relation with each other are subjected to multi-carrier modulation.

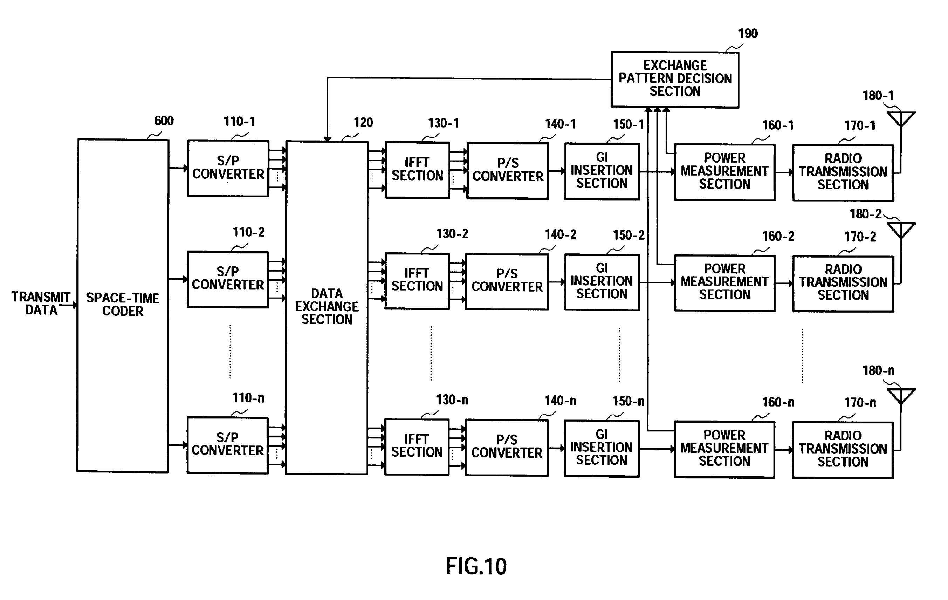

FIG. 10 is a block diagram showing a configuration of a transmitting multi-carrier communication apparatus according to the fourth embodiment. In the multi-carrier communication apparatus shown in the same figure, the same sections as those in the multi-carrier communication apparatus shown in FIG. 1 are assigned the same symbols to omit the descriptions. The multi-carrier communication apparatus shown in FIG. 10 has S/P converters 110-1 to n, a data exchange section 120, IFFT sections 130-1 to n, P/S converters 140-1 to n, GI insertion sections 150-1 to n, power measurement sections 160-1 to n, radio transmission sections 170-1 to n, transmitting antennas 180-1 to n, an exchange pattern decision section 190, and a space-time coder 600.

The space-time coder 600 subjects transmit data to Space-Time Coding so as to produce data streams having a coding relation with each other (namely, for example, information bits and redundant bits to the information bits).

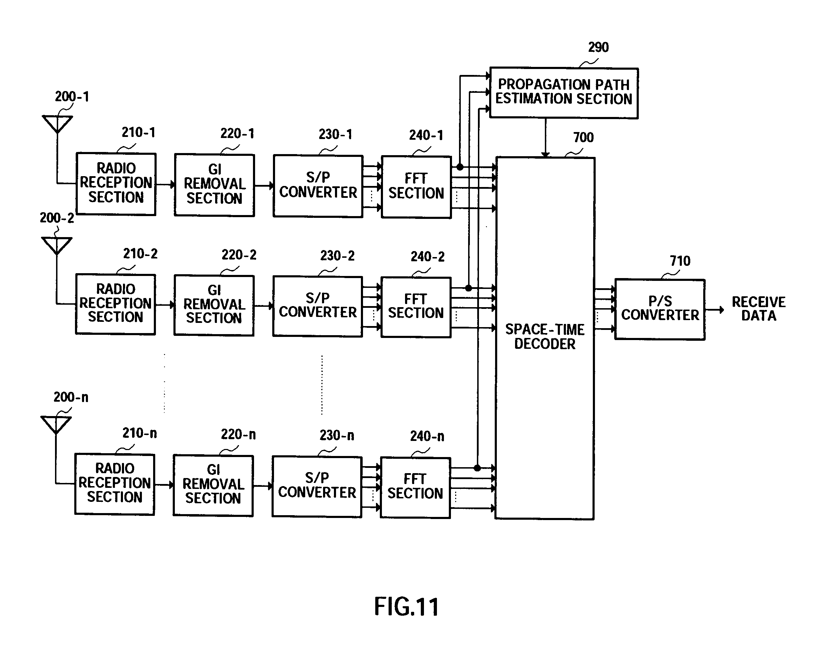

FIG. 11 is a block diagram showing a configuration of a receiving multi-carrier communication apparatus according to the fourth embodiment. In the multi-carrier communication apparatus shown in the same figure, the same sections as those in the multi-carrier communication apparatus shown in FIG. 2 are assigned the same symbols to omit the descriptions. The multi-carrier communication apparatus shown in FIG. 11 has receiving antennas 200-1 to n, radio reception sections 210-1 to n, GI removal sections 220-1 to n, S/P converters 230-1 to n, FFT sections 240-1 to n, a propagation path estimation section 290, a space-time decoder 700, and a P/S converter 710.

Based on the propagation path estimation results outputted from the propagation path estimation section 290, the space-time decoder 700 performs Space-Time decoding of each data stream and outputs the decoded results.

The P/S converter 710 P/S-converts the decoded results to produce receive data.

Next, operations of the multi-carrier communication apparatus configured as described above are described.

First, transmit data are subjected to Space-Time Coding by the space-time coder 600 to produce n data streams having a coding relation with each other. Respective data streams are each S/P-converted by the S/P converters 110-1 to n to produce parallel data for each data stream. The parallel data are inputted to the IFFT sections 130-1 to n through the data exchange section 120, are IFFT-processed by the IFFT sections 130-1 to n and then, the resulting parallel data in each data stream are arranged on sub-carriers of which the frequencies are orthogonalized with each other.

Then, respective data streams IFFT-processed are inputted to the P/S converters 140-1 to n and P/S converted to produce OFDM symbols.

Guard intervals are inserted into the OFDM symbols in each data stream by the GI insertion sections 150-1 to n, and the powers of the symbols are measured by the power measurement sections 160-1 to n. The measured powers are compared with the predetermined threshold, and as a result of the comparison, when the measured powers of all the data streams are equal to or lesser than the predetermined threshold, the OFDM symbols are subjected to radio transmission processing such as D/A conversion and up-conversion by the radio transmission sections 170-1 to n and are transmitted through the transmitting antennas 180-1 to n.

On the other hand, as a result of the comparison of powers, when a data stream of which the measured power is greater than the predetermined threshold is present, the measured powers of each data stream are communicated to the exchange pattern decision section 190. Then, by the exchange pattern decision section 190, an exchange pattern is decided in units of groups of subcarriers and outputted to the data exchange section 120 as control information, in order to exchange a part of the parallel data in a data stream of which the measured power is greater than the predetermined threshold for a part of the parallel data in another data stream. Then, an exchange of the parallel data based on the control information is performed by the data exchange section 120.

At this time, an exchange of data is performed only between groups of subcarriers having the same frequency as shown in FIG. 5 (first embodiment) because in STC or SFC, separation of data streams is performed assuming that respective data streams have a coding relation with each other. That is, an exchange of data is performed such that respective symbols transmitted at the same time and at the same frequency always have a coding relation with each other.

In particular, when a block coding such as STTD (Space-Time coded Transmit Diversity) is employed as a coding method in the space-time coder 600, the space-time decoder 700 performs block decoding processing assuming that propagation path characteristics of symbols continuing in terms of time and frequency scarcely vary. Therefore, when the block coding unit in the space-time coder 600 extends between groups for data exchange in the data exchange section 120, the assumption on the propagation path characteristics is not realized due to an exchange of data, as a result, the block decoding processing is not correctly performed. For this reason, a group for data exchange is formed using a block coding unit as a minimum unit.

Thereafter, in the same manner as in the first embodiment, an exchange of data is performed till powers of all the OFDM symbols reach equal to or lesser than the predetermined threshold, and when powers of all the OFDM symbols reach equal to or lesser than the predetermined threshold (that is, a transmission peak power is suppressed), respective OFDM symbols are transmitted through the transmitting antennas 180-1 to n by the radio transmission sections 170-1 to n.

Respective OFDM symbols transmitted are multiplexed on a propagation path, received by respective receiving antennas 200-1 to n and subjected to radio reception processing such as down-conversion and A/D conversion by the radio receiving sections 210-1 to n. From the OFDM symbols subjected to radio reception processing, guard intervals are removed by the GI removal sections 220-1 to n, the symbols are then S/P-converted by the S/P converters 230-1 to n and FFT-processed by the FFT sections 240-1 to n. Thereafter, using the FFT processing results, propagation path estimation is performed by the propagation path estimation section 290, and decoding processing corresponding to the Space-Time Coding at the transmitting end is performed by the space-time decoder 700.

Then, the decoded results are P/S-converted by the P/S converter 710, whereby receive data can be obtained.

As described above, according to the present embodiment, a part of data in a data stream of which the measured power is greater than a predetermined threshold is exchanged with a part of data in another data stream arranged on a sub-carrier having the same frequency as that of the data and therefore, even when a multi-antenna transmission such as STC or SFC is performed, it is possible to prevent increase in interference among sub-carriers and to suppress a transmission peak power without lowering transmission efficiency while making side information unnecessary.

When a function of applying spread coding to data in the frequency axis direction is added to each of the embodiments, an exchange pattern causing no collapse of orthogonality between diffusion chips is used, whereby the same effects can be obtained.

As described above, according to the present invention, in the radio communication that performs multi-antenna transmission, the transmission peak power can be suppressed without inducing nonlinear distortion and without decreasing transmission efficiency.

This application is based on Japanese Patent Application No. 2002-320158 filed on Nov. 1, 2002, entire content of which is incorporated by reference herein.

### Industrial Applicability

The present invention can be applied to a multi-carrier communication apparatus and multi-carrier communication method for performing multi-antenna transmission.

## Claims

1. A multi-carrier communication apparatus for simultaneously transmitting a plurality of different data streams from a plurality of antennas using the same carrier group, said apparatus comprising:
a determination section that determines whether a peak power is occurred in at least one data stream, and
an exchange section that exchanges a part of data in said data stream for a part of data in another data stream when it is determined that the peak power is occurred.

2. The multi-carrier communication apparatus according to claim 1, wherein said determination section comprises:
a measurement section that measures a power of each data stream, and
a comparison section that compares a measured power with a predetermined threshold, and
wherein said determination section determines a peak power is occurred in a data stream of which the measured power is greater than a predetermined threshold as a result of comparison.

3. The multi-carrier communication apparatus according to claim 1, wherein said exchange section comprises:
an exchange pattern decision section that decides a pattern for exchanging a part of data in each data stream in units of predetermined groups of carriers, and
a data exchange section that exchanges a part of data in each data stream according to the decided exchange pattern.

4. The multi-carrier communication apparatus according to claim 3, wherein said exchange pattern decision section decides a pattern for exchanging data between groups having an equal frequency among carrier groups.

5. The multi-carrier communication apparatus according to claim 3, wherein said exchange pattern decision section decides a pattern for exchanging data between groups having different frequencies among carrier groups.

6. The multi-carrier communication apparatus according to claim 3, wherein said data exchange section exchanges orthogonal pilot data included in a part of data in each data stream.

7. The multi-carrier communication apparatus according to claim 3, wherein said data exchange section does not exchange orthogonal pilot data included in a part of data in each data stream.

8. The multi-carrier communication apparatus according to claim 1, wherein said exchange section comprises a transmission section that transmits exchange pattern information for communicating a pattern for exchanging data to a communication opposite station.

9. The multi-carrier communication apparatus according to claim 8, wherein said transmission section transmits exchange pattern information using a particular carrier excluded from an object to be exchanged.

10. The multi-carrier communication apparatus according to claim 1, further comprising a formation section that forms different directivity weights for each data stream,
wherein when data are exchanged by said exchange section, said formation section performs an exchange of the directivity weights in response to an exchange of the data.

11. The multi-carrier communication apparatus according to claim 1, further comprising a production section that subjects transmit data to coding so as to produce a plurality of different data streams having a coding relation with each other.

12. The multi-carrier communication apparatus according to claim 11, wherein said production section subjects transmit data to block coding at every predetermined block coding unit, and wherein said exchange section performs an exchange of data using said block coding unit as a minimum unit.

13. The multi-carrier communication apparatus according to claim 11, wherein said production section subjects transmit data to convolution coding so as to produce a plurality of different data streams.

14. The multi-carrier communication apparatus according to claim 11, wherein said production section subjects transmit data to turbo-coding so as to produce a plurality of different data streams.

15. A communication terminal apparatus having the multi-carrier communication apparatus according to claim 1.

16. A base station apparatus having the multi-carrier communication apparatus according to claim 1.

17. A multi-carrier communication method for simultaneously transmitting a plurality of different data streams from a plurality of antennas using the same carrier group, said method comprising the steps of:
determining whether a peak power is occurred in at least one data stream, and
exchanging a part of data in said data stream for a part of data in another data stream when it is determined that the peak power is occurred.
